# EUROPEAN PATENT APPLICATION

(11) **EP 1 154 646 A1**
(43) Date of publication of application: **14.11.2001**
(21) Application number: 00980016.0
(22) Date of filing: 08.12.2000
(51) Int. Cl.: H04N 7/14

(54) **MULTIMEDIA PROVIDER SYSTEM, MULTIMEDIA CONVERSION SERVER, AND MULTIMEDIA TERMINAL**

(30) Priority: 08.12.1999 JP 34943599
(71) Applicant: Kabushiki Kaisha Toshiba, Minato-ku, Tokyo 105 (JP)
(72) Inventor: ARAI, Yasunori, Fuchu-shi, Tokyo 183-0043 (JP)
(74) Representative: HOFFMANN - EITLE
(86) International application number: JP0008712
(87) International publication number: WO0143435

(57) **Abstract**

The multimedia providing system has servers 4A, 5B, and 6C capable of transmitting multimedia content on the Internet 7, a conversion server 1 capable of obtaining the multimedia content and retransmitting it to the outside of the Internet 7, and a terminal 2 capable of obtaining the retransmitted multimedia content and providing a user with it for use. The conversion server 1 comprises a first access means for accessing the servers 4A, 5B, and 6C through the Internet 7, a first obtaining means for obtaining markup language and multimedia content from the servers 4A, 5B, and 6C, a converter means for converting the markup language and multimedia content obtained by the first obtaining means into a format suitable for communication with the terminal 2, and a transmitter means for retransmitting the markup language and multimedia content converted by the converter means, to the terminal 2. The terminal 2 comprises a second access means for accessing the servers 4A, 5B, and 6C through the conversion server 1, a second obtaining means for obtaining the retransmitted markup language and multimedia content, and display means for displaying the multimedia content obtained by the second obtaining means in accordance with the markup language obtained by the second obtaining means.

## Description

### Technical Field

The present invention relates to a multimedia providing system, a multimedia conversion server, and a multimedia terminal in which audio, video, data, and the like are treated simultaneously, and particularly to a multimedia providing system, a multimedia conversion server, and a multimedia terminal which are suitable for efficiently converting and transferring the multiplexing system for the media on the Internet and the multiplexing system for the media in circuit switching.

### Background Art

In general, an Internet protocol known as TCP/IP (Transmission Control Protocol/Internet Protocol) is used as standard for the Internet. To access the Internet, a portable terminal is demanded to incorporate a protocol processing section.

The history of Internet protocols go back to the basic software called UNIX (OS: Operating System). Since then, protocol software has come to be installed as standard in personal computers in recent years, due to the popularity of the Internet. This is because the computer processing performance has greatly advanced, so that the load from the relatively complicated TCP/IP processing is no longer a problem for personal computers.

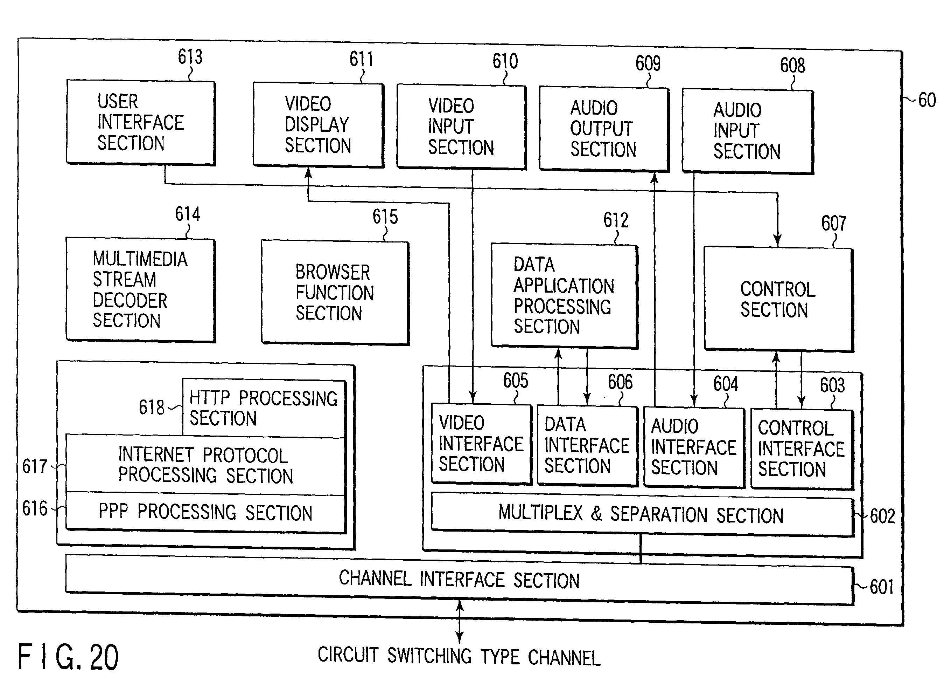

FIG. 20 shows a structural example of a terminal having a function of this kind. This terminal has, for example, a videophone function and a function for accessing the Internet and obtaining multimedia contents.

This figure illustrates a case of performing the videophone function. As shown in this figure, the terminal 60 is comprised of a telephone channel interface section 601, multiplex & separation section 602, a control interface section 603, an audio interface section 604, a video interface section 605, a data interface section 606, a control section 607, an audio input section 608, an audio output section 609, a video input section 610, a video display section 611, a data application processing section 612, a user interface section 613, a multimedia stream decoder section 614, a browser function section 615, a PPP (Point to Point Protocol) processing section 616, an Internet protocol processing section 617, and a HTTP (Hyper Text Transfer Protocol) processing section 618.

The channel interface section 601 is an interface for connection with a circuit switching type channel, and is provided between the channel and the multiplex & separation section 602.

The multiplex & separation section 602 is provided between the channel interface section 601 and each of the interface sections 603, 604, 605, and 606. The section 602 gathers video, audio, data application data, and control data for every constant sector, in accordance with a constant rule, thereby to maintain synchronization between the media (video, audio, and data control data).

The control interface section 603 is an interface for inputting/outputting control information, which is exchanged between terminals and necessary for terminal operation, between the control section 607 and the multiplex & separation section 602.

The audio interface section 604 is an interface for inputting/outputting audio data between the audio input section 608, the audio output section 609, and the multiplex & separation section 602.

The video interface section 605 is an interface for inputting/outputting video data between the video input section, the video display section 611, and the multiplex & separation section 602.

The data interface section 606 is an interface for inputting/outputting data application data between the data application processing section 612 and the multiplex & separation section 602.

The control section 607 exchanges signals with the control interface section 603 and receives user's instructions from the user interface section 613, thereby to control operation of the terminal 60.

The audio input section 608 converts audio into audio data and supplies it to the audio interface section 604. The audio output section 609 converts audio data from the audio interface section 604 into audio. The video input section 610 converts video into video data and supplies it to the video interface section 605. The video output section 611 converts video data from the video interface section 605 into video and displays it.

The data application processing section 612 processes data applications with use of data from the data interface section 606, and returns the output thereof to the data interface section 606. The user interface section 613 receives an operation from a user and transmits an instruction to the control section 607.

The other parts of the structure are not directly related with the explanation made below, and therefore, explanation of those parts will be made later.

With respect to the videophone function, operation will now be explained.

Since data received from the channel interface section 601 is multiplexed, the data is separated by the multiplex & separation section 602 for every medium and transferred to the media interface sections 603, 604, 605, and 606. Output from the control interface section 603 is supplied to the control section 607. Output from the audio output section 604 is supplied to the audio output section 609. Output from the video interface section 605 is supplied to the video display section 611. Output from the data interface section 606 is supplied to the data application processing section 612. Video, audio, data application data, and control data transmitted from an opposite terminal are processed by these sections.

Data are also inputted to the interfaces in the reverse direction. Control data from the control section 607 is inputted to the control interface section 603. Audio data generated by the audio input section 608 is inputted to the audio interface section 604. Video data generated by the video input section 611 is inputted to the video interface section 605. Data application data generated by the data application processing section 612 is inputted to the data interface section 606. Input data inputted to the media interface sections 603, 604, 605, and 606 is multiplexed by the multiplex & separation section 602 and is sent to the channel interface section 601. The data then reaches an opposite terminal.

The opposite terminal comprises the same mechanism as that described above. Therefore, the terminals can function as a videophone.

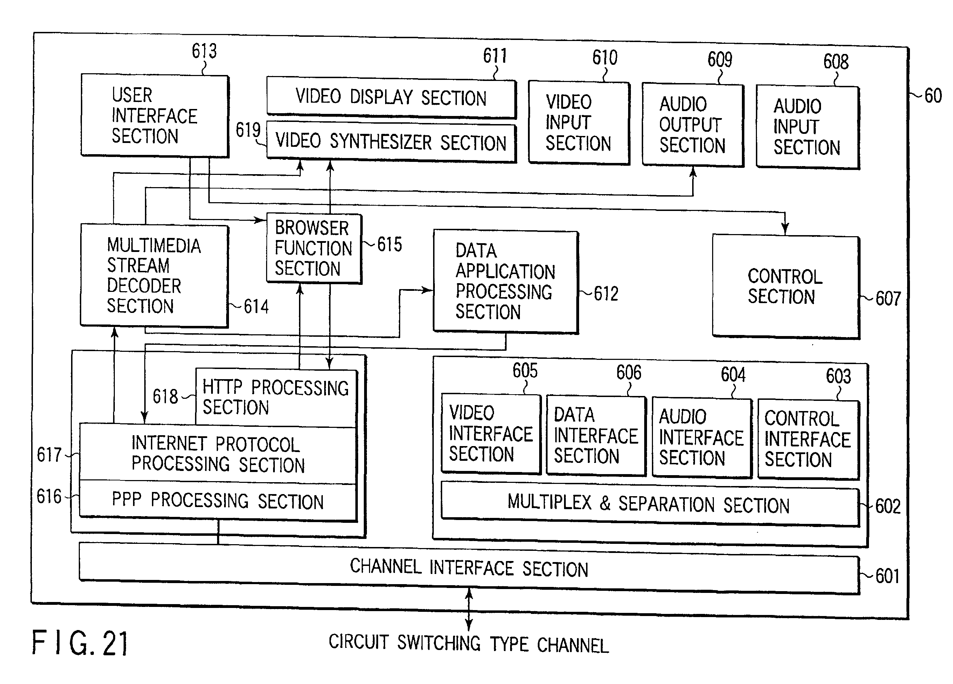

Next, explanation will be made of the case where the terminal 60 accesses the Internet and multimedia contents are watched and heard, with reference to FIG. 21.

Although the components are the same as those used when the system operates as a videophone shown in FIG. 20, connection between the components is different.

The PPP processing section 616 is provided between the channel interface section 601 and the Internet protocol processing section 617 and is used to exchange/transfer the Internet protocol through a circuit switching type channel.

The Internet protocol processing section 617 is provided between the PPP processing section 616 and the HTTP processing section 618 and supplies a multimedia stream for the multimedia stream decoder section 614. The section 617 also receives appropriately the output from the data application processing section 612. These section processes the standard communication protocol for the Internet.

The HTTP processing section 618 is provided between the Internet protocol processing section 617 and the browser function section 615 and serves to process the protocol for accessing WWW servers (World Wide Web) (not shown).

The video output section 611 converts video data from the video synthesizer section 619 into video and display it.

The multimedia stream decoder section 614 receives a multimedia stream from the Internet protocol processing section 617 and decodes the stream. The section 614 further supplies media such as video, audio, and data respectively to the video synthesizer section 619, the audio output section 609, and the data application processing section 612.

The audio output section 609 converts the audio data from the multimedia stream decoder section 614 into audio.

The control section 607 receives user's instructions from the multimedia stream decoder section 613 or so to control operation of this terminal.

The data application processing section 612 processes a data application with use of data from the multimedia stream decoder section 614 and transfers appropriately the output therefrom. The user interface section 613 transfers instructions from the user to the control section 607.

The structure of the other parts is not directly related to the explanation made below.

Operation of the multimedia visual/sound functions will now be explained.

The PPP processing section 616 is connected to the channel interface section 601. The PPP protocol thereby enables exchange of the Internet protocol through a channel of the circuit switching type channel. The PPP processing section 616 communicates with the PPP processing section of a communication target, thereby to provide errorless communication for PPP uses.

The Internet protocol processing section 617 serves to communicate with a specific server or the like on the Internet and supplies users with a secure data communication path to the server or the like.

An environment which enables interactive operation is provided when a WWW server (not shown) on the Internet is accessed. That is, the following operation is carried out. The HTTP processing section 618 communicates with a connected server by the HTTP protocol, so that target page information is obtained in the form of text information (plain text) called HTML. This information is provided to the browser function section 615. The browser function section 615 interprets and shapes the information expressed by the HTML language, to create a screen intended by its creator.

A created screen is sent to the video synthesizer section 619. The video synthesizer section 619 creates an image to be displayed on the video display section 611 from a plurality of input images, and also manages the positions of respective video images.

When a user selects a desired content while a table of contents of multimedia contents is displayed on a WWW page, the URL (Uniform Resource Locator) or file name of a server related to the content is transferred from the browser function section 615 to the HTTP processing section 618. The HTTP processing section 618 then sends this request to a target server with use of HTTP.

When the target server knows that the user desires multimedia content, it extracts the multimedia content and supplies it on the Internet.

The side of the terminal 60 receives this content and sends it to the multimedia stream decoder section 614 to reproduce it. Reproduced information is divided into video, audio, and data application data are respectively sent to the video synthesizer section 619, the audio output section 609, and the data application processing section 612. Multimedia can be watched and heard in this manner.

Next, explanation will be made of a case where multimedia contents are watched and heard by the terminal 60 while it makes communication through the videophone.

The figure shows connection relationships between components on reception through a videophone and on receiving HTML by Internet access. Other connection relationships related to the above can be understood by referring to FIGS. 20 and 21, explanations for which have already been given.

A specific connection of the PPP processing section 616 to the data interface section 606 is made to make communication through the videophone, thus enabling multimedia content to be seen/heard. In this manner, it is possible to exchange Internet data with the use of data ports of the data interface section 606, even during communication by videophone.

As explained above, to construct a terminal which has both the functions of a circuit switching type videophone and Internet access together, it is necessary to include a processing program for operation as a videophone and a processing program for Internet access in parallel, and to switch between them or combine them together in accordance with the application or situation.

In a portable terminal, however, higher priority is given to low power consumption than high processing ability in order to achieve a longer battery life. Therefore, the power load due to processing of the Internet protocol is still heavy.

Further, to connect to an Internet server which provides multimedia contents and to enjoy it, it is necessary to operate simultaneously an Internet connection program and a multimedia processing program. As a result, the power consumption increases so that the usable time period becomes short.

In portable terminals, the transfer capacity assigned to communication is generally small. Meanwhile, in the case of the Internet, original header information items are respectively added to the layers of the protocol so that the data transfer amount increases. The Internet is thus not suitable for communication using such a low transfer capacity.

### Disclosure of Invention

An object of the present invention is to provide a multimedia providing system, a multimedia conversion server, and a multimedia terminal, which are suitable for watching/listening on the Internet by a portable terminal having a videophone function, and which are suitable for efficient conversion and transfer of multimedia between the multiplexing method of multimedia on the Internet and the multiplexing method of multimedia in circuit switching.

A multimedia providing system according to the first invention comprises: a server capable of transmitting multimedia content onto the Internet; a multimedia conversion server capable of obtaining the multimedia content and retransmitting the content to the outside of the Internet; and a multimedia terminal capable of obtaining the multimedia content retransmitted and providing the content for a user to use the content, wherein the multimedia conversion server includes first access means for accessing the server through the Internet, first obtaining means for obtaining markup language (HTML or the like) and multimedia content from the server, converter means for converting the markup language and the multimedia content obtained by the first obtaining means, into a format suitable for communication with the multimedia terminal, and transmitter means for retransmitting the markup language and the multimedia content to the multimedia terminal, and the multimedia terminal includes second access means for accessing the server through the multimedia conversion server, second obtaining means for obtaining the markup language and the multimedia content retransmitted, and display means for displaying the multimedia content obtained by the second obtaining means, in accordance with the markup language obtained by the second obtaining means.

According to the first invention, direct access with a server on the Internet is made by a multimedia conversion server. Therefore, a multimedia terminal need not have resources for access by means of Internet protocol.

On the other hand, the multimedia terminal can obtain markup language and multimedia content through the multimedia conversion server, even though the multimedia terminal has no resources for access by means of the Internet protocol. Therefore, use of the Internet and watching/hearing of multimedia can be achieved by having only a means for forming an image based on the markup language and multimedia content.

Also, a multimedia conversion server according to the second invention comprises: access means for accessing a server through the Internet; obtaining means for obtaining markup language and multimedia content from the server; converter means for converting the markup language and the multimedia content obtained, into a format suitable for communication with a multimedia terminal; and transmitter means for retransmitting the markup language and the multimedia content converted, to the multimedia terminal.

The second invention corresponds to the multimedia conversion server in the first invention.

A multimedia terminal according to the third invention comprises: access means for accessing a server on Internet through a multimedia conversion server; obtaining means for obtaining markup language and multimedia content through the multimedia conversion server; and display means for displaying the obtained multimedia content in accordance with the obtained markup language.

The third invention corresponds to the multimedia terminal in the first invention.

Also, according to the fourth invention, in the multimedia providing system according to the first invention, the multimedia content contains data application data, the multimedia conversion server further includes means for separating the data application data from the obtained multimedia content, means for multiplexing the separated data application data and the obtained markup language, and means for making the multiplexed data application data and the markup language be contained in the multimedia content to be converted, and the multimedia terminal further includes means for separating solely the multiplexed data application data and markup language data from the markup language obtained by the obtaining means and the multimedia content, and means for separating the data application data and the markup language from the solely separated data application data and markup language.

According to the fourth invention, it is unnecessary to have resources for access by means of the Internet protocol, and use of the Internet and watching/hearing of multimedia can be achieved by having only a means for forming an image based on the markup language and multimedia content. Further, in the case where multimedia content includes a data application, the multimedia terminal can use the application.

According to the fifth invention, in the multimedia conversion server according to the second invention, the multimedia content contains data application data, and the server further includes means for separating solely the data application data from the obtained multimedia content, means for multiplexing the solely separated data application data and the obtained markup language, and means for making the multiplexed data application data and the markup language be contained in the multimedia content to be converted.

The fifth invention corresponds to the multimedia conversion server in the fourth invention.

According to the sixth invention, in the multimedia terminal according to the third invention, the multimedia content contains data application data, the obtained markup language and multimedia content contain data in which the markup language and the data application data are multiplexed, and the terminal further includes means for solely separating the multiplexed data application data and markup language from the obtained markup language and multimedia content, and means for separating the data application data and the markup language from the solely separated data application data and markup language.

The sixth invention corresponds to the multimedia terminal in the fourth invention.

Also, according to the seventh invention, in the multimedia terminal according to the third invention, the access means makes access with use of information concerning markup language.

According to the seventh invention, the multimedia terminal can transfer information for Internet access, without including an Internet protocol processing section, and it is possible to realize an Internet connection equivalent to a personal computer in use.

According to the eighth invention, in the multimedia providing system, the multimedia terminal further includes means for processing the separated data application data, means for multiplexing output information of the processed data application data which is used to access with the server and information concerning markup language for accessing the server, and means for transmitting the multiplexed information to the multimedia conversion server, and the multimedia conversion server further includes means for receiving the transmitted information, means for dividing the received information into the output information of the data application data which is used for accessing the server and the information concerning the markup language for accessing the server, and means for accessing the server by each of the separated pieces of information.

According to the eighth invention, it is unnecessary to have resources for access by means of Internet protocol, and use of the Internet and watching/hearing of multimedia can be achieved by having only a means for forming an image based on the markup language and multimedia content. Further, in a case where multimedia content includes a data application, the multimedia terminal can use the application. In addition, in a case where the multimedia content contains a data application, the multimedia terminal can bidirectionally use the application.

Also, according to the ninth invention, the multimedia conversion server according to the fifth invention further includes means for receiving information transmitted from the multimedia terminal, means for separating the output information of the data application data which is used for accessing the server and information concerning markup language for accessing the server from the received information, and means for accessing the server by each of the pieces of the separated information.

The ninth invention corresponds to the multimedia conversion server in the eighth invention.

Also, according to the tenth invention, the multimedia terminal according to the sixth invention further includes means for processing the separated data application data, means for multiplexing output information of the data application data which is used for accessing the server and information concerning markup language for accessing .the server, and means for transmitting the multiplexed information to the multimedia conversion server.

The tenth invention corresponds to the multimedia terminal in the eighth invention.

Also, according to the eleventh invention, in the multimedia providing system, the multimedia content contains data application data, the multimedia conversion server further includes means for separating solely the data application data from the obtained multimedia content, and means for making the solely separated data application data and the obtained markup language be independently contained in the multimedia content to be converted, and the multimedia terminal further includes means for independently separating the data application data and the markup language from the markup language and multimedia content obtained by the obtaining means.

According to the eleventh invention, means for multiplexing and means for separation are not required. It is therefore possible to attain advantages equal to those of the fourth invention, while simplifying the structure.

Also, according to the twelfth invention, in the multimedia conversion server, the multimedia content contains data application data, and the server further includes means for separating solely the data application data from the obtained multimedia content, and means for making the solely separated data application data and the obtained markup language be independently contained in the multimedia content to be converted.

The twelfth invention corresponds to the multimedia conversion server in the eleventh invention.

Also, according to the thirteenth invention, in the multimedia terminal according to the third invention, the multimedia content contains data application data, and the terminal further includes means for independently separating the data application data and the markup language from the obtained markup language and multimedia content.

According to the fourteenth invention, a multimedia providing system comprises: a server capable of transmitting multimedia content onto the Internet; a multimedia conversion server capable of obtaining the multimedia content and retransmitting the content to the outside of the Internet; and a multimedia terminal capable of obtaining the multimedia content retransmitted and providing the content for a user to use the content, wherein the multimedia conversion server includes first access means for accessing the server through the Internet, first obtaining means for obtaining markup language and multimedia content form the server, separator means for separating video information from the multimedia content obtained by the first obtaining means, synthesizer means for synthesizing the separated video information and the markup language obtained by the first obtaining means to attain an image, converter means for converting the image synthesized by the synthesizer means and the multimedia content obtained by the first obtaining means, into a format suitable for communication with the multimedia terminal, and transmitter means for retransmitting the image and the multimedia content converted by the converter means, to the multimedia terminal, and the multimedia terminal includes second access means for accessing the server through the multimedia conversion server, second obtaining means for obtaining the image and the multimedia content retransmitted, and display means for displaying the image obtained by the second obtaining means.

According to the fourteenth invention, an image can be formed by synthesizing obtained markup language and video of multimedia content in the multimedia conversion server. Therefore, the multimedia terminal need not have resources which are required in accordance with processing of the markup language.

Also, according to the fifteenth present invention, in the multimedia providing system according to the fourteenth invention, the multimedia conversion server further includes receiver means for receiving an instruction of a user of the multimedia terminal from the multimedia terminal, an interpreter means for interpreting the received instruction of the user, and display means for displaying the instruction in the obtained markup language in accordance with the instruction interpreted, the synthesizer means synthesizes the markup language including the instruction displayed by the display means, in place of the obtained markup language, and the separated video information, thereby to attain an image, and the multimedia terminal further includes input means for inputting an instruction of a user, and transmitter means for transmitting the inputted instruction to the multimedia conversion server.

According to the fifteenth invention, an image can be formed by synthesizing obtained markup language and video of multimedia content in the multimedia conversion server. Therefore, the multimedia terminal need not have resources which are required in accordance with processing of the markup language. Further, an instruction of the user of a multimedia terminal can be transferred to the multimedia conversion server without changes, so the multimedia terminal does not need resources which are required to interpret it.

Also, according to the sixteenth invention, in the multimedia providing system according to the fourteenth invention, the multimedia conversion server further includes drawing means for drawing a cursor on the image synthesized, receiver means for receiving an instruction of a user of the multimedia terminal from the multimedia terminal, and motion means for moving a position of the cursor drawn, in accordance with the instruction received, the converter means converts the image on which the cursor is drawn, in place of the synthesized image, and the obtained multimedia content, into a format suitable for communication with the multimedia terminal, and the multimedia terminal further includes input means for inputting an instruction of a user, and transmitter means for transmitting the inputted instruction to the multimedia conversion server.

According to the sixteenth invention, an image can be formed by synthesizing obtained markup language and video of multimedia content in the multimedia conversion server. Therefore, the multimedia terminal need not have resources which are required in accordance with processing of the markup language. Further, management of coordinates which is required in accordance with drawing of a cursor can be carried out in the multimedia conversion server, so that burdens on processing/transfer of the multimedia terminal can be reduced much more.

### Brief Description of Drawings

FIG. 1 is a structural view showing an embodiment where a multimedia providing system according to the present invention is applied to Internet;
FIG. 2 is a block diagram showing the structure of an embodiment of a multimedia conversion server according to the present invention;
FIG. 3 is a block diagram showing a specific structural example of multimedia content reproduction/data conversion section 101 used in the present invention;
FIG. 4 is a block diagram showing a specific structural example of multimedia content reproduction/data conversion section 101 used in the present invention, which is different from the section 101 shown in FIG. 3;
FIG. 5 is an explanatory view for a structural example of a data frame dealt with by the data multilayer section 1012;
FIG. 6 is a block diagram showing the structure of an embodiment of a multimedia terminal according to the present invention;
FIG. 7 is a block diagram showing the structure of a multimedia terminal according to the present invention, which is different from the terminal shown in FIG. 6;
FIG. 8 is a block diagram showing the structure of an embodiment of a multimedia conversion server according to the present invention, which is different from the server shown in FIG. 2;
FIG. 9 is a block diagram showing a specific structural example of the multimedia content reproduction/separation section 114 used in the present invention;
FIG. 10 is a block diagram showing the structure of an embodiment of a multimedia terminal according to the present invention, which is different from the terminals shown in FIGS. 6 and 7;
FIG. 11 is a block diagram showing the structure of an embodiment of a multimedia conversion server according to the present invention, which is different from the servers shown in FIGS. 2 and 8;
FIG. 12 is a block diagram showing the structure of an embodiment of a multimedia conversion server according to the present invention, which is different from the servers shown in FIGS. 2, 8, and 11;
FIG. 13 is a block diagram showing the structure of an embodiment of a multimedia conversion server according to the present invention, which is different from the servers shown in FIGS. 2, 8, 11, and 12;
FIG. 14 is a block diagram showing the structure of an embodiment of a multimedia terminal according to the present invention, which is different from the servers shown in FIGS. 6, 7, and 10;
FIG. 15 is a block diagram showing the structure of an embodiment of a multimedia terminal according to the present invention, which is different from the servers shown in FIGS. 6, 7, 10, and 14;
FIG. 16 is a block diagram showing the structure of an embodiment of a multimedia terminal according to the present invention, which is different from the servers shown in FIGS. 6, 7, 10, 14, and 15;
FIG. 17 is a block diagram showing a specific structural example of multimedia content reproduction/data conversion section 101 used in the present invention, which is different from the sections 101 shown in FIGS. 3 and 4;
FIG. 18 is a block diagram showing a specific structural example of a terminal function assist section 113 used in the present invention;
FIG. 19 is a block diagram showing a specific structural example of a terminal function assist section 113 used in the present invention, which is different from the section 113 shown in FIG. 18;
FIG. 20 is a block diagram showing a structural example of a conventional terminal;
FIG. 21 is a block diagram showing a structural example of a conventional terminal; and

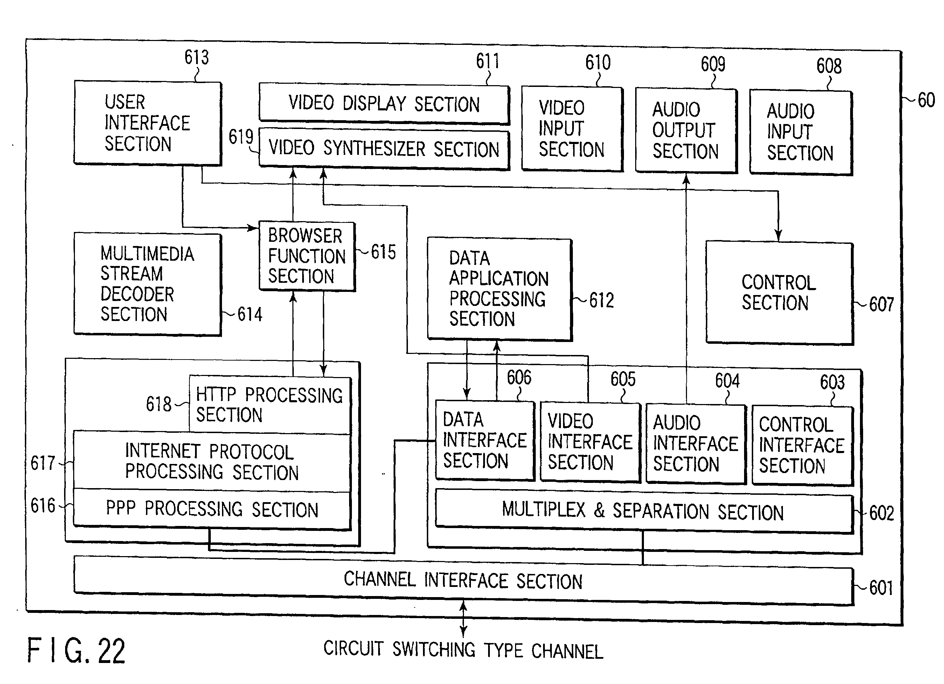

FIG. 22 is a block diagram showing a structural example of a conventional terminal.

### Best Mode for Carrying Out of the Invention

In the following, embodiments of the present invention will be explained with reference to the drawings.

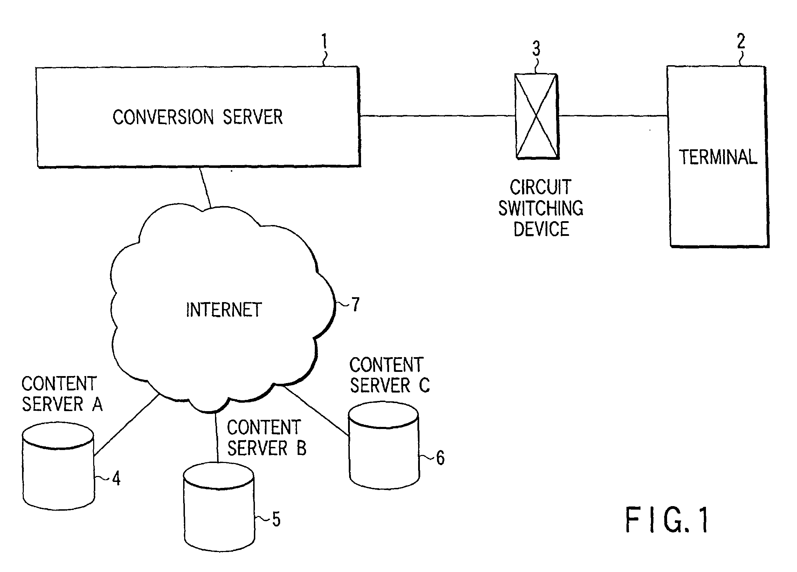

FIG. 1 shows an embodiment in case where a multimedia providing system according to the present invention is applied to Internet. As shown in this figure, this multimedia providing system comprises a multimedia conversion server 1 (hereinafter called simply a conversion server 1), a multimedia terminal 2 (hereinafter called simply a terminal 2), a circuit switching device 3, a content server A 4, a content server B 5, a content server C 6. The conversion server 1 and the content servers A 4, B 5, and C 6 are accessible through Internet 7.

The conversion server 1 can convert data from the content servers A 4, B 5, and C 6 on the Internet 7 to comply with communication with the terminal 2 and retransmits the data.

The terminal 2 receives provided multimedia through the conversion server 1 and the circuit switching device 3 and provides them directly for users.

The circuit switching device 3 connects the conversion server and the terminal 2 to each other by circuit switching. The content servers A 4, B 5, and C 6 are sources which provide multimedia contents.

The specific operation of these components will be explained together in the later part of the present specification which explains an embodiment of the conversion server 1 and the terminal 2.

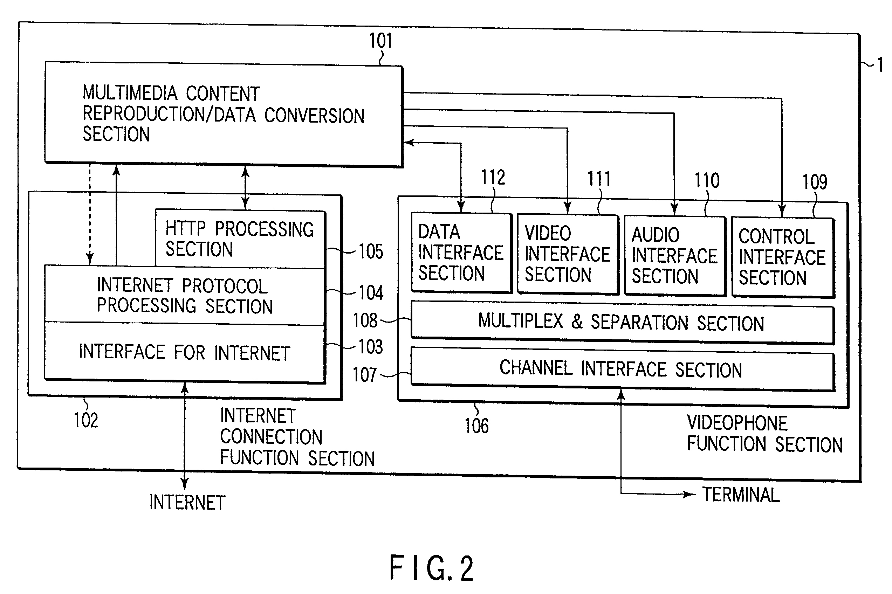

Next, an embodiment of the conversion server 1 according to the present invention will be explained with reference to FIG. 2. As shown in the figure, the conversion server 1 has multimedia content reproduction/data conversion section 101, an Internet connection function section 102, and a videophone function section 106.

The multimedia content reproduction/data conversion section 101 receives multimedia content stream (a data stream containing multimedia content) and HTML from the Internet connection function section 102. The section 101 divides the content into media forming the content and supplies them to the videophone function section 106. Also, the section 101 receives data whose source is in the terminal 2 (shown in FIG. 1) and supplies it to the Internet connection function section 102.

The Internet connection function section 102 connects with the content servers A 4, B 5, and C 6 (shown in FIG. 1) through the Internet 7 (also shown in FIG. 1) receives provided contents. The section 102 also performs predetermined processing on the provided contents and then supplies it to the multimedia content reproduction/data conversion section 101.

The videophone function section 106 multiplexes media from the multimedia content reproduction/data conversion section 101, etc. and retransmits it to the terminal 2 (shown in FIG. 1) through the circuit switching device 3 (also shown in FIG. 1). The section 106 also receives data (e.g., URL information) from the terminal 2 (shown in FIG. 1) and supplies it to the multimedia content reproduction/data conversion section 101.

The Internet connection function section 102 has an Internet interface section 103 for the Internet, an Internet protocol processing section 104, and a HTTP processing section 105.

The Internet interface section 103 serves, for example, to communicate directly with the Internet 7 in FIG. 1. Information thus interfaced is exchanged with the Internet protocol processing section 104.

The Internet protocol processing section 104 processes information from the Internet interface section 103 (in the downstream direction) and information from the multimedia content reproduction/data conversion section 101 and the HTTP processing section 105 (in the upstream direction) in accordance with the Internet protocol.

The HTTP processing section 105 obtains HTML in accordance with HTTP and supplies it to the multimedia content reproduction/data conversion section 101 (in the downstream direction). The section 105 also performs HTTP processing on data from the multimedia content reproduction/data conversion section 101 (in the upstream direction).

The videophone function section 106 has a channel interface section 107, a multiplex & separation section 108, a control interface section 109, an audio interface section 110, a video interface section, and a data interface section 112.

The channel interface section 107 serves to communicate with the terminal 2 (shown in FIG. 1) through the circuit switching device 3 (also shown in FIG. 1). Information thus interfaced is exchanged with the multiplex & separation section 108.

The multiplex & separation section 108 multiplexes information from the interface sections 109, 110, 111, and 112 and supplies it to the channel interface section 106 (in the downstream direction). The section 108 also supplies data (e.g., URL information) from the terminal 2 through the channel interface section 106, shown in FIG. 1, to the data interface section 112 (in the upstream direction).

The control interface section 109 receives control data from multimedia content reproduction/data conversion section 101 and sends it to the multiplex & separation section 108.

The audio interface section 110 receives audio data from the multimedia content reproduction/data conversion section 101 and sends it to the multiplex & separation section 108.

The video interface section 111 receives video data from the multimedia content reproduction/data conversion section 101 and sends it to the multiplex & separation section 108.

The data interface section 112 receives data such as HTML form the multimedia content reproduction/data conversion section 101 and sends it to the multiplex & separation section 108 (in the downstream direction). Also, the section 112 also sends data (e.g., URL information) from the terminal 2 shown in FIG. 1 to the multimedia content reproduction/data conversion section 101 (in the upstream direction).

Operation of this conversion server 1 will now be explained. Data (such as a user's request for URL information or the like) from the terminal 2 reaches the channel interface section 107 of the videophone function section 106 provided in the conversion server 1. This data is guided to the HTTP processing section 105 of the Internet connection function section 102 through the multiplex & separation section 108, the data interface section 112, and the multimedia content reproduction/data conversion section 101.

Further, predetermined processing is carried out by the HTTP processing section 105, the Internet protocol processing section 104, and the Internet interface section 103, and the output therefrom reaches servers such as the contents A 4, B 5, and C 6 (shown in FIG. 1) which provide contents, through the Internet 7 (also shown in FIG. 1).

In response thereto, a certain one of the content servers generates what is requested (a WWW page, content, or the like) from the terminal 2 (shown in FIG. 1) on the basis of the data which has thus arrived. The Internet connection function section 102 of the conversion server 1 then can receive it through the Internet 7.

The received WWW page, content, or the like is subjected to predetermined processing by the Internet interface section 103 and the Internet protocol processing section 104, and is outputted in the form of multimedia content stream to the multimedia content reproduction/data conversion section 1-1 while those parts that are related to HTML are guided to the HTTP processing section 105.

The content outputted in the form of multimedia content stream to the multimedia content reproduction/data conversion section 101 is reproduced as items of media information for respective media which are respectively guided to the interface sections 109, 110, 111, and 112. Also, the HTTP processing section 105 obtains HTML and guides it to the data interface section 112 through the multimedia content reproduction/data conversion section 101.

The data (e.g., data application data) which should be guided to the data interface section 112 among the items of media information for respective media is multiplexed on the same channel as that of the text expressed in the HTML, which is obtained by the HTTP processing section 105.

The items of media information guided to the interface sections 109, 110, 111, and 112 are multiplexed by the multiplex & separation section 108 in a manner similar to videophone communication, and are transferred to the terminal 2 through the channel interface section 107 to the terminal 2 (shown in FIG. 1) after passing through the circuit switching device 3 (also shown in FIG. 1).

In this videophone communication, video, audio, control data, and data (based on data ports) are communicated in a predetermined data format.

In the manner described above, the operation of the conversion server 1 is made to make requests for contents and the like and transmission thereof. According to this conversion server 1, communication with the terminal 2 is made in the videophone method. Therefore, the Internet protocol processing section is not necessary for the terminal 2, so that burdens thereof are reduced accordingly.

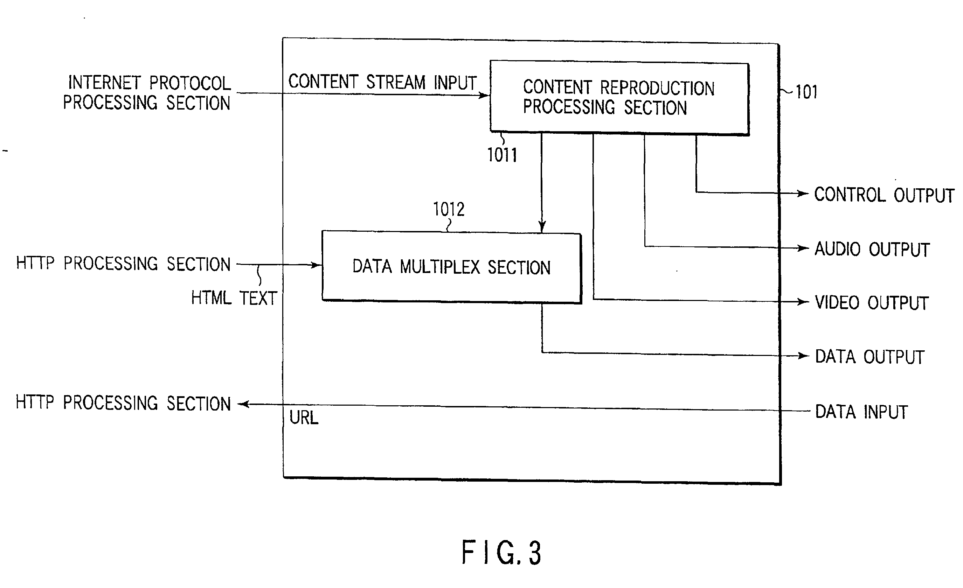

Next, a specific structural example of the multimedia content reproduction/data conversion section 101 shown in FIG. 2 will be explained with reference to FIG. 3. FIG. 3 is a block diagram showing the specific structural example of the multimedia content reproduction/data conversion section 101.

As shown in FIG. 3, this multimedia content reproduction/data conversion section 101 has a content reproduction processing section 1011 and a data multiplex section 1012. Also, the section 101 has a route for flowing the data in the upstream direction, as shown in the figure.

The content reproduction processing section 1011 serves to reproduce multimedia content from the Internet protocol processing section 104 (shown in FIG. 2), as items of media information.

The data multiplex section 1012 multiplexes text expressed in HTML and data (e.g., data application data) from the content reproduction processing section 1011.

On the route which flows data in the upstream direction, data is received from the data interface section 112 (shown in FIG. 2) and is flown to the HTTP processing section 105 (also shown in FIG. 2). Operation of this multimedia content reproduction/data conversion section 101 will now be explained.

Multimedia content stream inputted from the Internet protocol processing section 104 (shown in FIG. 2) is reproduced by the content reproduction processing section 1011, as outputs for respective media. Also, data application data contained in the multimedia content is multiplexed together with HTML expression as an input from the HTTP processing section 105 (shown in FIG. 2), by the data multiplex section 1012, and is outputted as data.

In this structural example, only URL information is supposed to be upstream data which is supplied to the HTTP processing section 105 (shown in FIG. 2), kept as it is received. Both in the upstream and downstream directions, one channel is used for data ports (which are data channels for videophone communication).

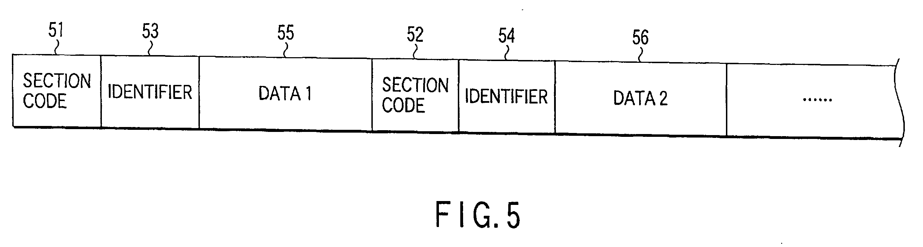

An example of a data frame dealt with by the data multiplayer section 1012 will be explained with reference to FIG. 5. This figure explains a structural example of the data frame.

Section codes 51, 52, ··· indicate sections of data. Identifiers 53, 53, ··· indicate types or the like of subsequent data items 55, 56, ···.

At those parts of the terminal 2 (shown in FIG. 1) that interface and separate data, output destinations are determined on the basis of the above information (the identifiers 53, 54, ···). Also, the end of the data can be found by detecting the section code.

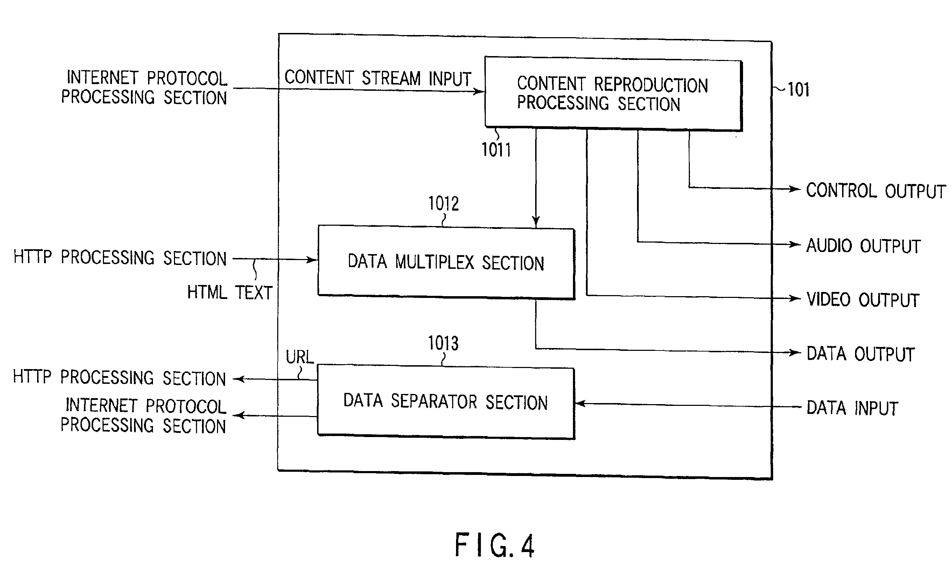

Next, a specific structural example of the multimedia content reproduction/data conversion section 101, which is different from the example shown in FIG. 3, will be explained with reference to FIG. 4. FIG. 4 is a block diagram showing a specific structural example of the multimedia content reproduction/data conversion section 101, which is different from that shown in FIG. 3.

In FIG. 4, the same components as those that have already been explained are denoted at the same reference numerals, and explanation of the structure and operation thereof will be omitted herefrom.

By the data separator section 1013, URLs and the like and data from data application data of the terminal 2 (shown in FIG. 1) are separated from multiplexed data supplied from the data interface section 112 (shown in FIG. 1).

This case can cover a case where data from a data application exists in the upstream direction. That is, in the terminal 2 (shown in FIG. 1), a data application which constructs multimedia is processed. If data is generated with respect to content servers A 4, B 5, and C 6 (also shown in FIG. 1) as a result, it is considered that this data and data such as URL information or the like requested by a user are multiplexed by the terminal 2 (also shown in FIG. 1), and a response to the multiplexed data is enabled.

Also, in this case, only one channel is used for data ports (data channels in videophone communication) both in the upstream and downstream directions.

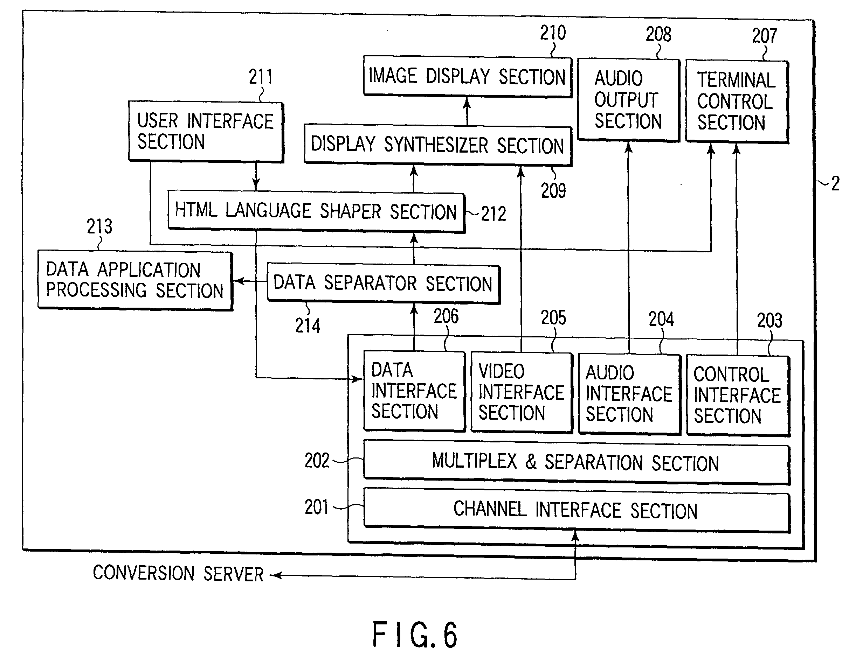

Next, an embodiment of the terminal 2 according to the present invention will be explained with reference to FIG. 6. This figure is a structural block diagram showing an embodiment of the terminal 2. As shown in this figure, the terminal 2 has a channel interface section 201, a multiplex & separation section 202, a control interface section 203, an audio interface section 204, a video interface section 205, a data interface section 206, a terminal control section 207, an audio output section 208, a display synthesizer section 209, an image display section 210, a user interface section 211, an HTML shaper section 212, a data application processing section 213, and a data separator section 214.

The channel interface section 201 is an interface for communicating with a conversion server 1 (shown in FIG. 1) through a circuit switching device 3 (also shown in FIG. 1). Interfaced information is exchanged with the multiplex & separation section 202.

The multiplex & separation section 202 serves to transfer multiplexed information from the channel interface section 201 to the interface sections 203, 204, 205, and 206 (in the downstream direction), and also transfers data (e.g., URL information) through the data interface section 206 to the channel interface section 201 (in the upstream direction).

The control interface section 203 serves to transfer control data to the terminal control section 207.

The audio interface section 204 serves to transfer audio data to the audio output section 208.

The video interface section 205 serves to transfer video data to the display synthesizer section 209.

The data interface section 206 receives data such as HTML or the like and transfers it to the data separator section 214 (in the downstream direction). The section 206 also receives data (e.g., URL information) indicating a request or the like from the terminal 2 from the HTML shaper section 212, and transfers it to the multiplex & separation section 202 (in the upstream direction).

The terminal control section 207 serves to operate and control the terminal 2, based on information from the control interface section 203 and the user interface section 211.

The audio output section 208 serves to convert audio data from the audio interface section 204 into audio.

The display synthesizer section 209 synthesizes video data from the video interface 205 and created images from the HTML shaper section 212 and supplies the synthesized result to the image display section 210.

The image display section 210 serves to convert video data supplied from the display synthesizer section 209 into video.

The user interface 211 is an interface of the terminal 2, which receives a selection or the like made by a user, and the selection thus received is guided appropriately to the HTML shaper section 212 or the terminal control section 207.

The HTML shaper section 212 is inputted with HTML separated by the data separator section 214 and shapes and creates images, based on the HTML and a user's instruction from the user interface section 211. The created images are outputted to the display synthesizer section 209. Also, the section 212 receives request information (e.g., URL information) from the user interface 211 and transfers it to the data interface section 206.

The data application processing section 213 is a processing section which processes a data application, which is a component forming part of multimedia and is separated by the data separator section 214.

The data separator section 214 separates multiplexed HTML and data application data from each other, and guides the HTML and the data application data to the HTML shaper section 212 and the data application processing section 213, respectively.

Operation of this terminal 2 will now be explained. HTML information and data application data as a component forming part of multimedia content, which are multiplexed on a data channel, reach the terminal 2 in the downstream direction, and for example, only URL information flows in the upstream direction. The terminal 2 corresponds to the conversion server 1 which uses a device shown in FIG. 3 as multimedia content reproduction/data conversion section 11 of the conversion server shown in FIG. 2.

A selection or the like made by a user is inputted to the user interface section 211, and URL information thereof is guided to the data interface section 206 through the HTML shaper section 212.

The URL information guided to the data interface section 206 reaches the conversion server 1 (shown in FIGS. 1 and 2) through the multiplex & separation section 202 and the channel interface section 201 and through the circuit switching device (shown in FIG. 1).

The URL information which has reached the conversion server 1 further reaches a specific one of the content servers A 4, B 5, and C 6 (shown in FIG. 1) by the route and processing explained with reference to FIG. 2. In response, the specific one of the content servers A 4, B 5, and C 6 transmits what is requested from the terminal 2 (a WWW page, a content, or the like), based on the data which has thus reached the servers. The transmitted information is guided to the channel interface section 201 of the terminal 2, relayed through the conversion server 1 (shown in FIGS. 1 and 2) as explained previously.

The information guided to the channel interface section 201 can be multimedia content communicated in the same manner as that of the videophone, as has already been explained with reference to the server 1 in FIG. 2. That is, the information can contain video, audio, control data, data application data, and HTML information, multiplexed on one channel (data channel).

This multimedia information is supplied to the multiplex & separation section 202 and is separated into respective data items. Further, video, audio, control data, and data application data and HTML information multiplexed on one channel, which have been separated from each other, are respectively guided to the interface sections 205, 204, 203, and 206.

The control data guided to the control interface section 203 is inputted to the terminal control section 207.

The multiplexed HTML information and data application data, which have been guided to the data interface section 206, are transferred to the data separator section 214 and are separated from each other. Among them, the HTML information is guided to the HTML shaper section 212 and an image is shaped and created. The image thus shaped and created is supplied to the display synthesizer section 209 and is synthesized with video from the video interface section 205. The synthesized image is supplied to the image display section 210 and displayed.

Also, the data application data as a component forming part of multimedia, which has been separated by the data separator section 214, is supplied to the data application processing section 213 and processed.

In response, users can input a new request through the user interface section 211, and a selection or the like thus made reaches again specific one of the content server A 4, B 5, and C 6 (shown in FIG. 1) through the conversion server 1 (shown in FIGS. 1 and 2) from the terminal 2. Thereafter, the system operates in the same manner as explained previously. That is, a user can interactively use the multimedia providing system.

Since the terminal 2 need not comprise an Internet protocol processing section any more, the power demand and the burden to software and hardware processing are reduced greatly.

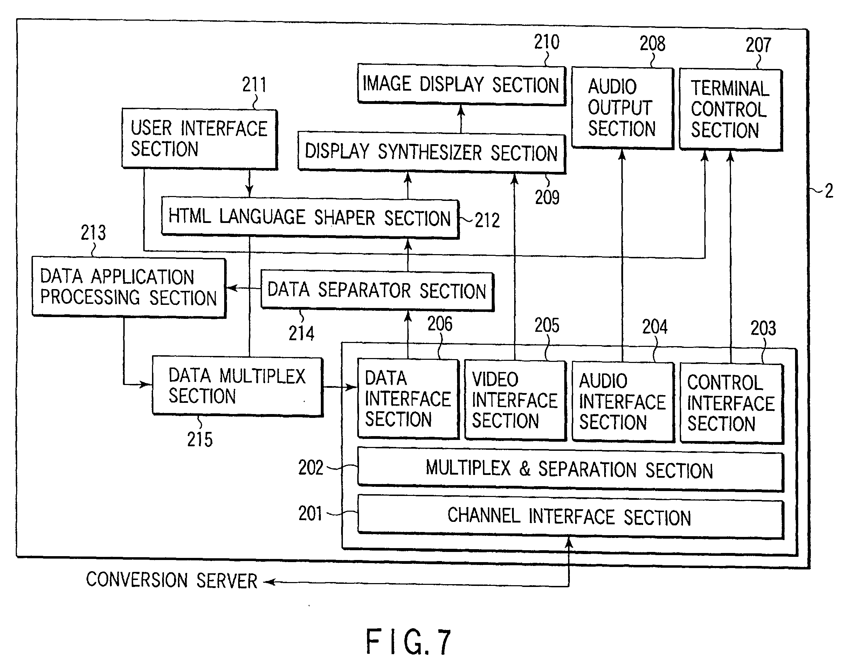

Next, another embodiment of a terminal according to the present invention, which is different from the terminal 2 shown in FIG. 6, will be explained with reference to FIG. 7. FIG. 7 is a block diagram showing the structure of the embodiment of the terminal 2 which is different from the terminal 2 shown in FIG. 6.

In FIG. 7, the same components as those that have already been explained are denoted by the same reference numerals, and explanation of the structure and operation thereof will be omitted.

The data multiplex section 215 multiplexes a request (e.g., URL information) from the HTML shaper section 212 and output data from the data application processing section 213 on one channel, and transfers the multiplexed data, as data of the data ports, to the data interface section 206.

This terminal 2 can be used in a case where the conversion server 1 (shown in FIG. 1) uses the multimedia content reproduction/data conversion section 101 shown in FIG. 4.

That is, in a case where an output to a server or the like as a source for providing a content takes place in accordance with processing of a data application as a component forming part of multimedia content in the terminal 2, the output is transferred to a specific one of the content servers A 4, B 5, C 6, and the like (shown in FIG. 1).

At this time, the output described above is multiplexed on a request (e.g., URL information) from a user by the terminal 2 and is separated by the data separator section 1013 in the multimedia content reproduction/data conversion section 1013 (shown in FIG. 4) in the multimedia content reproduction/data conversion section 101 of the conversion server 1 (shown in FIGS. 1 and 2) through the circuit switching device 3 (shown in FIG. 1). Therefore, the output can be communicated in the upstream direction from the section 1013.

The output to the server or the like as a source which provides contents can include text information or other information which express opinions and desires from users concerning contents.

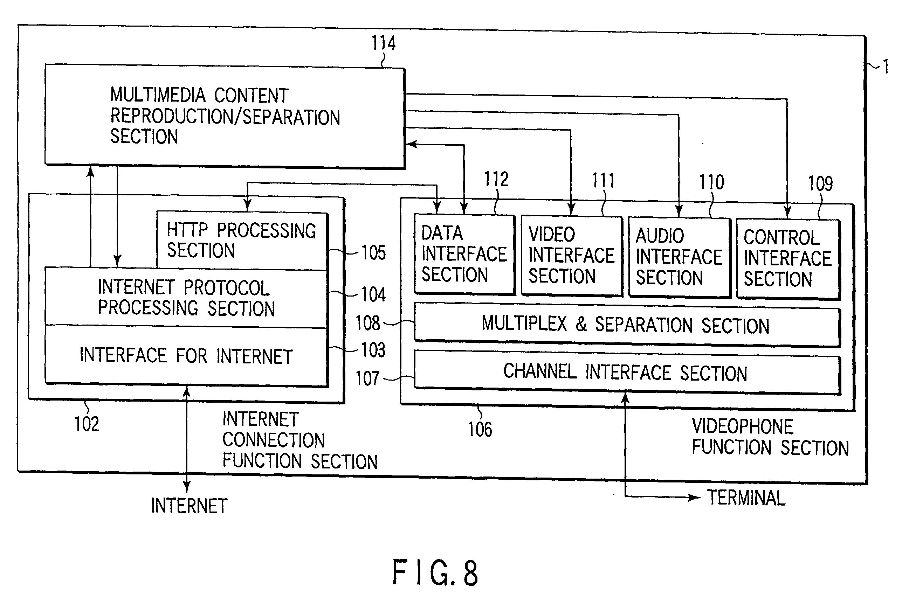

Next, another embodiment of a conversion server according to the present invention which is different from the conversion server 1 shown in FIG. 2, with reference to FIG. 8. FIG. 8 is a block diagram showing the structure of the embodiment of the conversion server 1, which is different from the conversion server 1 shown in FIG. 2.

In FIG. 8, the same components as those that have already been explained are denoted by the same reference numerals, and explanation of the structure and operation thereof will be omitted.

The present embodiment differs from the embodiment shown in FIG. 2 in that the present embodiment shows a conversion server in case where two channels can be used for the data ports in videophone communication.

Therefore, the present embodiment comprises multimedia content reproduction/separation section 114 in place of the multimedia content reproduction/data conversion section 101 shown in FIG. 2. The data application data separated by this section is supplied as a first channel to the data interface section 112. On the contrary, return of the output in accordance with data application processing at the terminal 2 (shown in FIG. 1) is transferred to the multimedia content reproduction/separation section 114 from the data interface section 112, regarded as it is from the first channel.

Also, the HTML information from the HTTP processing section 105 is supplied as a second channel to the data interface section 112. On the contrary, user's request information from the terminal 2 (shown in FIG. 1) is transferred to the HTTP processing section 105 from the data interface section 112, regarded as it is from the second channel.

In the present embodiment, the multimedia content reproduction/separation section 114 does not require multiplexing/separation of data with respect to data application data. Therefore, the structure can be simplified.

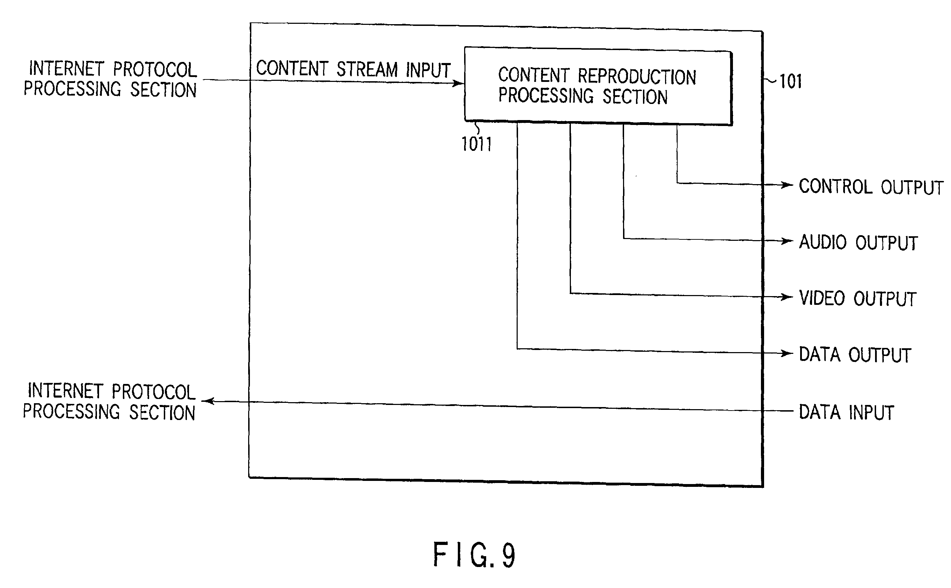

Next, a specific structural example of the multimedia content reproduction/separation section 114 in FIG. 8 will be explained with reference to FIG. 9. FIG. 9 is a block diagram showing a specific structural example of the multimedia content reproduction/separation section 114.

In FIG. 9, the same components as those that have already been explained are denoted by the same reference numerals, and explanation of the structure and operation thereof will be omitted.

The route which flows data in the upstream direction shown in FIG. 9 is a route which flows return of output according to data application processing in the terminal 2 (shown in FIG. 1). Its input is given from the data interface section 112 in FIG. 8, and its output is given to the Internet protocol processing section 104 in FIG. 8.

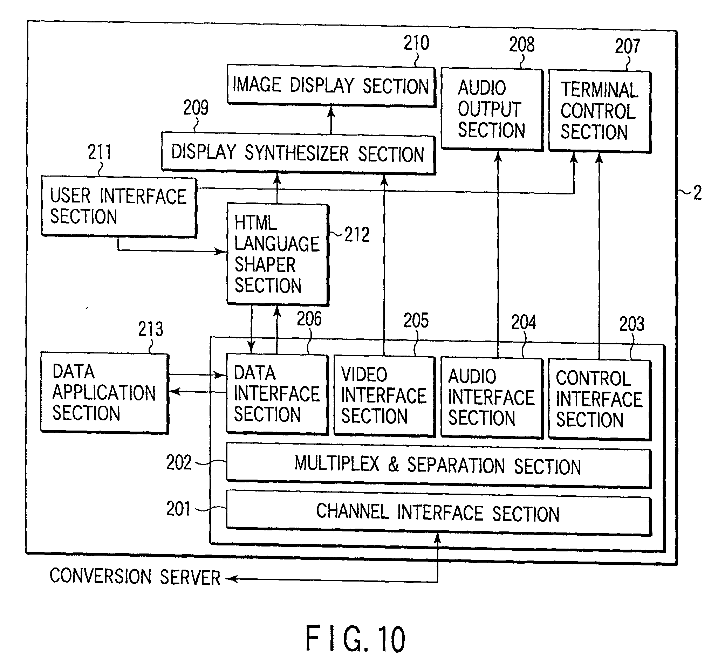

Next, another embodiment of a terminal according to the present invention which is different from the terminals 2 shown in FIGS. 6 and 7 will be explained with reference to FIG. 10. FIG. 10 is a block diagram showing the structure of another embodiment of the terminal 2 different from the terminals 2 shown in FIGS. 6 and 7.

In FIG. 10, the same components as those that have already been explained are denoted by the same reference numerals, and explanation of the structure and operation thereof will be omitted.

The present embodiment differs from the embodiments shown in FIGS. 6 and 7 in that the present embodiment shows a conversion server in case where two channels can be used for the data ports in videophone communication.

Therefore, data application data from the conversion server 1 (shown in FIG. 8) reaches the data interface section 206 with use of the first channel, and is further guided to the data application data processing section 213. On the contrary, return of the output according to data application processing is transferred to the conversion server 1 (shown in FIG. 8) with use of the first channel from the data interface section 206.

Meanwhile, HTML information from the HTTP processing section 105 in the conversion server 1 (shown in FIG. 8) reaches the data interface section 206 with use of the second channel, and is further guided to the HTML shaper section 212. On the contrary, user's request information (e.g., URL information) from the terminal 2 is transferred to the conversion server 1 (shown in FIG. 8) from the data interface section 206 with use of the second channel.

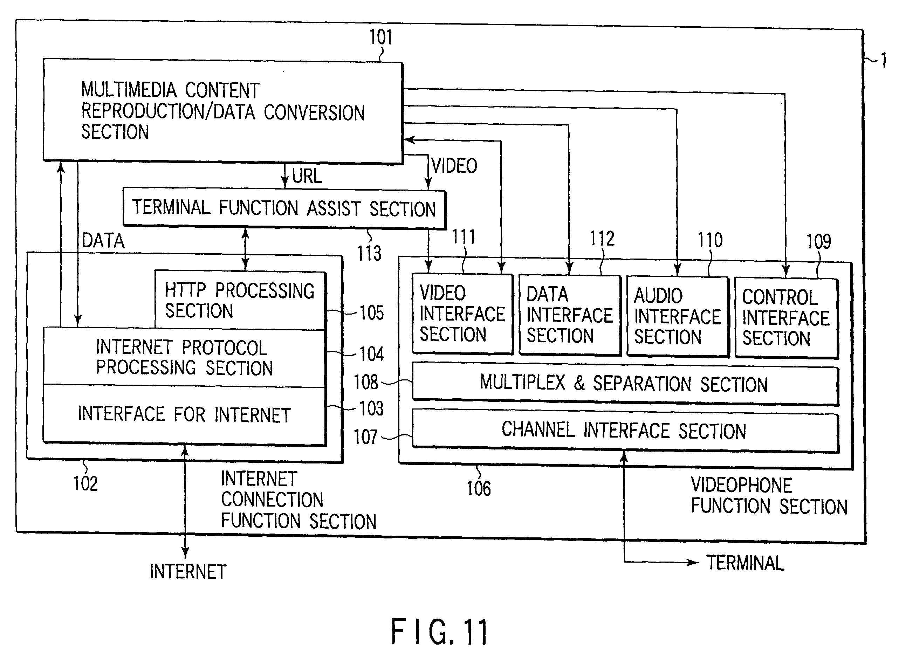

Next, another embodiment of a conversion server according to the present invention, which is different from the conversion servers 1 shown in FIGS. 2 and 8, will be explained with reference to FIG. 11. FIG. 11 is a block diagram showing the structure of the embodiment of the conversion server 1 which is different from the conversion servers shown in FIGS. 2 and 8.

In FIG. 11, the same components as those that have already been explained are denoted by the same reference numerals, and explanation of the structure and operation thereof will be omitted.

The present embodiment differs from the embodiments shown in FIGS. 2 and 8 in that the conversion server 1 is constructed so as to reduce the processing amount of software to be installed in the side of the terminal 2.

The terminal function assist section 113 is inputted with video reproduced by the multimedia content reproduction/data conversion section 101, and creates an image to be displayed on the terminal, from the reproduced video, HTML obtained by the HTTP processing section 105 in the downstream direction, and information (which is inputted to the terminal function assist section 113 through the multimedia content reproduction/data conversion section 101 from the data interface section 112) containing a user's instruction and the like among upstream data from the terminal. The section 113 then sends the created image to the video interface section 111. Also, the section 113 receives information (e.g., URL information) containing a user's request and the like among upstream data from the terminal, from the multimedia content reproduction/data conversion section 101, and transfers it to the HTTP processing section 105.

That is, in this conversion server 1, the image to be displayed in the side of the terminal is synthesized and created by the conversion server 1, based on video (in the downstream direction) as a component forming part of multimedia, HTML (in the downstream direction) expressing a WWW page, and a user's instruction (in the upstream direction) from the user of the terminal. The synthesized and created image is transferred to the terminal from the videophone function section 106.

Accordingly, the side of the terminal need not synthesize or create an image but needs only to display directly the transferred image. The processing amount of the software to be installed in the side of the terminal can much more reduced.

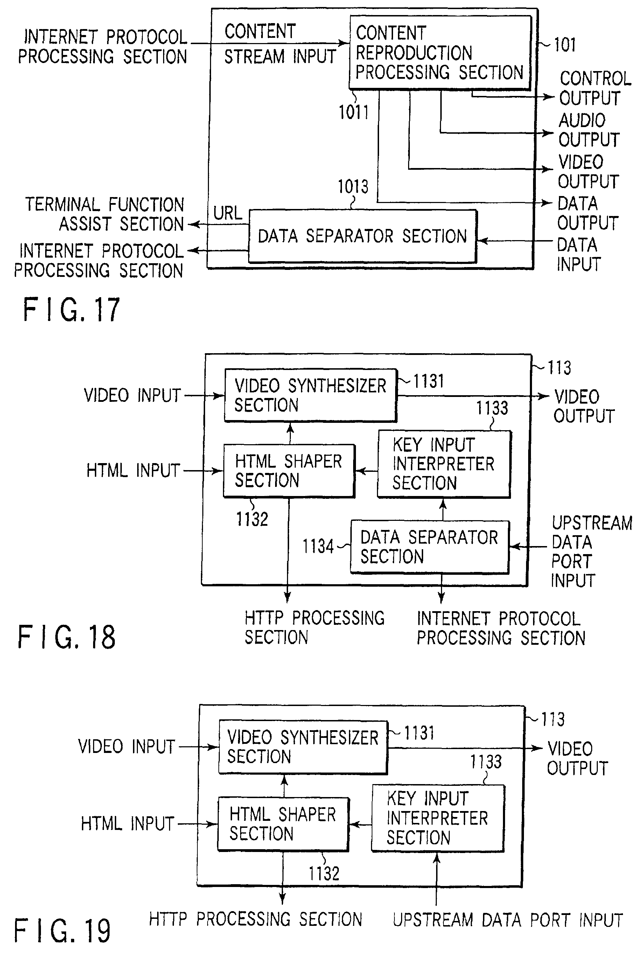

An internal structural example of the multimedia content reproduction/data conversion section 101 will now be explained with reference to FIG. 17. This figure is a block diagram showing a structural example of the multimedia content reproduction/data conversion section 101.

In this figure, the same components as those that have already been explained are denoted by the same reference numerals, and explanation of the structure and operation thereof will be omitted.

The data separator section 1013 separates output data of data application processing and information (e.g., URL information or the like) concerning a user's instruction/request from upstream multiplexed data. The output data of the data application processing is outputted to the Internet protocol processing section 104 shown in FIG. 11, and the information (e.g., URL information or the like) concerning the user's instruction/request is outputted to the terminal function assist section 113 (shown in FIG. 11).

Also explained now will be an internal structural example of the terminal function assist section 113 (shown in FIG. 11). This figure is a block diagram showing a structural example of the terminal function assist section 113.

As shown in the figure, the terminal function assist section 113 has a video synthesizer section 1131, an HTML shaper section 1132, and a key input interpreter section 1133.

The video synthesizer section 1131 synthesizes video data from the multimedia content reproduction/ data conversion section 101 (shown in FIG. 11) and a created image from the HTML shaper section 1132 and supplies the synthesized result to the video interface 111 (shown in FIG. 11).

The HTML shaper section 1132 is inputted with HTML from the HTTP processing section 105 (shown in FIG. 11), and shapes and creates an image, based on the HTML and a user's instruction from the key input interpreter section 1133. Also, the section 1132 receives user's request information (e.g., URL information) from the key input interpreter section 1133, and transfers it to the HTTP processing section 105 (shown in FIG. 11).

The key input interpreter section 1133 receives information (e.g., URL information) containing the user's request or the like among upstream data from the terminal, from the multimedia content reproduction/data conversion section 101 (shown in FIG. 11), and interprets what is related to the key input. The section 113 then transfers it to the HTML shaper section 1132.

As can be seen from the above explanation to the structure, the present example of the terminal function assist section 113 can operate as the terminal function assist section 113 in FIG. 11.

In place of using the structures shown in FIGS. 17 and 19, the multimedia content reproduction/data conversion section 101 and the terminal function assist section 113 in FIG. 11 may be modified so as to exclude the data separator section 1013 from the structure shown in FIG. 17, and to replace the structure shown in FIG. 19 with that shown in FIG. 18. This is because the terminal function assist section 113 comprises the data separator section 1134 in FIG. 17, which has functions equivalent to the data separator section 1013.

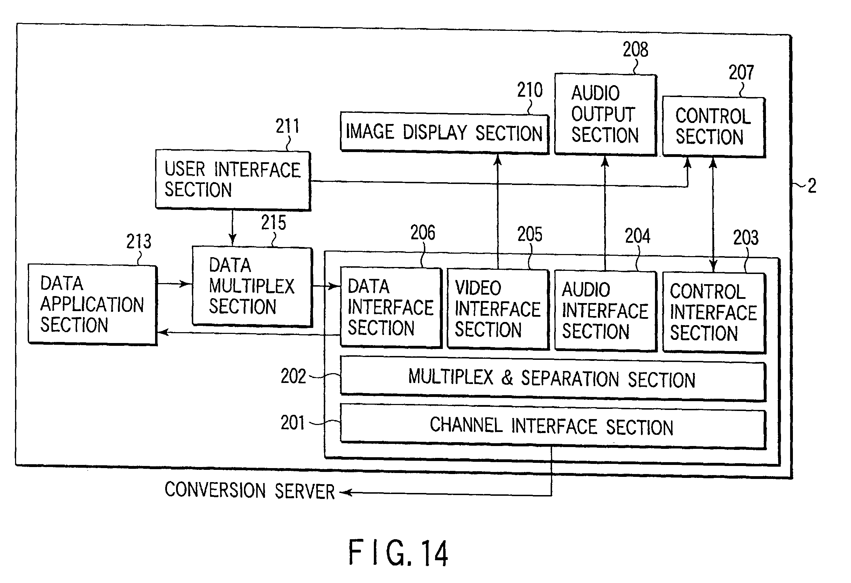

Next, an embodiment of the terminal 2 based on the present invention capable of responding to the conversion server 1 shown in FIG. 11 will be explained with reference to FIG. 14. FIG. 14 is a block diagram showing the structure of the embodiment of the terminal 2, which is different from the terminals 2 shown in FIGS. 6, 7, and 10.

In FIG. 14, the same components as those that have already been explained are denoted by the same reference numerals, and explanation of the structure and operation thereof will be omitted.

In the present terminal 2, video extracted from the video interface section 205 is already synthesized with video of multimedia content by the conversion server 1 (shown in FIG. 11). Therefore, video need not be synthesized on the terminal 2 side.

In the user interface section 211 of the terminal 2, there can be a system in which a key input made by a user is directly transmitted to the conversion server 1 (shown in FIG. 1), if an interface on which a candidate is shifted sequentially among selectable candidates in a key direction by using upper, lower, left, and right keys.

Even in the case of adopting a system in which a cursor like a mouse pointer, drawing of cursor is executed by the conversion server 1 (shown in FIG. 11) on a synthesized screen created by the conversion server 1. In this manner, the drawing position of the cursor can be managed by the conversion server 1.

As a result of this, the cursor need not be managed by the side of the terminal 2. In addition, an instruction of the cursor position can be transferred, as simple information indicating the moving direction, from the terminal 2 side. Therefore, information of coordinates of the cursor position need not be transferred. Accordingly, it is possible to reduce more burden to the terminal 2 and to reduce the amount of information transferred to the conversion server 1 (show in FIG. 11).

Information concerning the user interface such as key input or the like made by a user, and data for the content servers A 4, B 5, and C 6 (shown in FIG. 1) which is generated by a data application are multiplexed by the data multiplex section 215 and are thereafter transferred to the data interface section 206.

The multiplexed data which has reached the conversion server 1 (shown in FIG. 11) is divided into key input information and output data of the data application, by the data separator section 1013 shown in FIG. 17 or the data separator section shown in FIG. 18, as has already been explained in FIGS. 11, 17, and 18. The key input information is transferred to the key input interpreter section 1133 (shown in FIG. 19 or 18), as well as the output data of the data application to the Internet protocol processing section 104 (shown in FIG. 11).

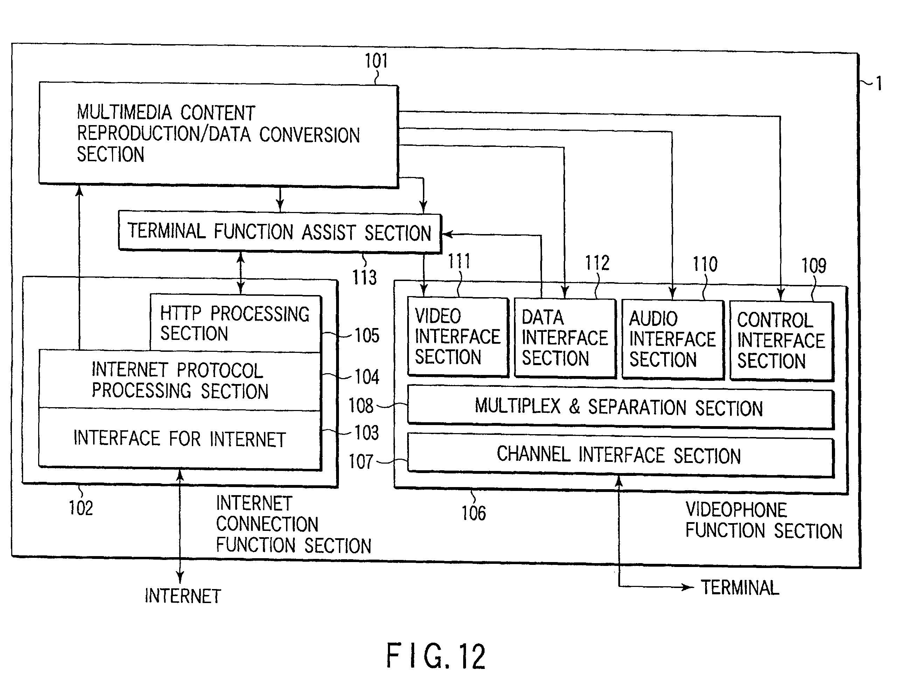

Next, an embodiment of a conversion server according to the present invention, which is different from the conversion servers 1 shown in FIGS. 2, 8, and 11, will be explained with reference to FIG. 12. FIG. 12 is a block diagram showing the structure of the embodiment of the conversion server 1 which is different from the conversion servers 1 shown in FIGS. 2, 8, and 11.

In FIG. 12, the same components as those that have already been explained are denoted by the same reference numerals, and explanation of the structure and operation thereof will be omitted.

The present embodiment differs from the embodiment shown in FIG. 11 in that the structure is arranged so as to respond to the case where the output of data application processing at the terminal does not return to the conversion server 1.

Therefore, the output of the data interface section 112 is, for example, only URL information for the HTTP processing section 105 and user's instruction information, and is directly guided to the terminal function assist section 113. For example, the structure shown in FIG. 19 can be used as the terminal function assist section 113, and it is not necessary to perform separation of data in the upstream direction.

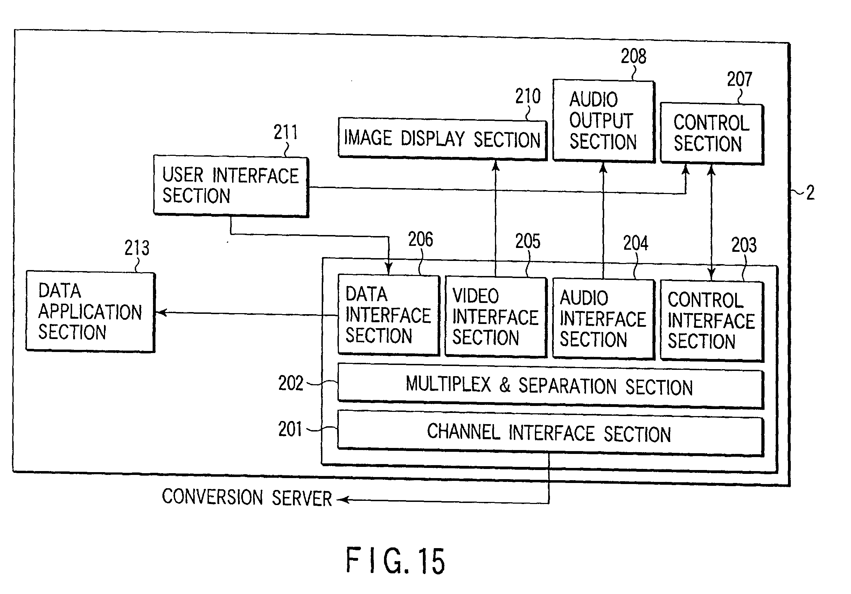

Next, an embodiment of the terminal 2 according to the present invention, which is capable of responding to the conversion server 1 shown in FIG. 12, will be explained with reference to FIG. 15. FIG. 15 is a block diagram showing the structure of the embodiment of the terminal 2, which is different from the terminals 2 shown in FIGS. 6, 7, 10, and 14.

In FIG. 15, the same components as those that have already been explained are denoted by the same reference numerals, and the structure and operation thereof will be omitted.

The present embodiment is different from the embodiment shown in FIG. 14 in that the output of the data application processing section 213 is not transferred to the side of the conversion server 1 (shown in FIG. 12) in accordance with processing made by the section 213. Therefore, there is not route for inputting data to the data interface section 206 from the data application processing section 213.

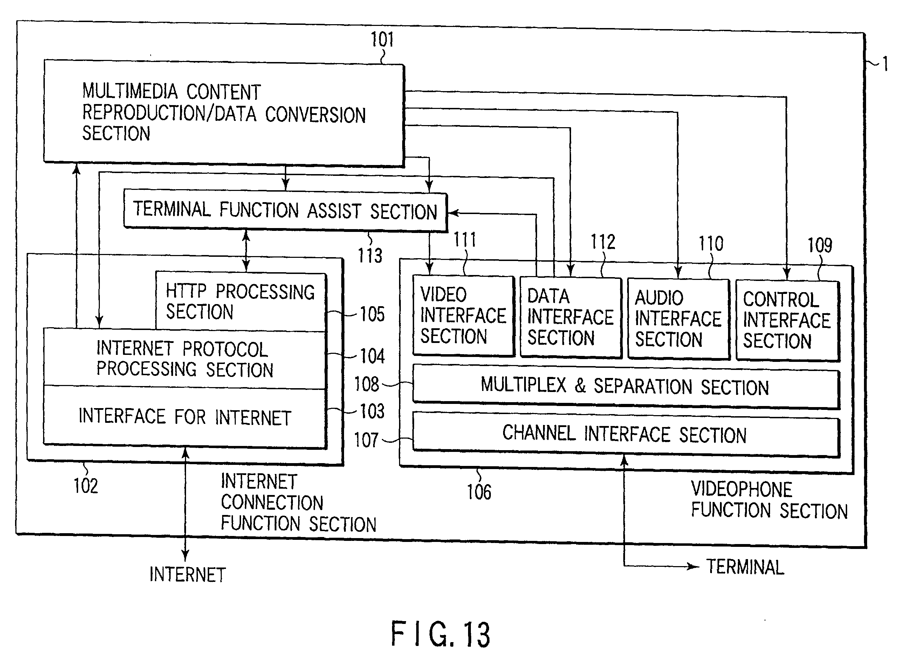

Next, an embodiment of a conversion server according to the present invention, which is different from the conversion servers 1 shown in FIGS. 2, 8, 11, and 12, will be explained with reference to FIG. 13. FIG. 13 is a block diagram showing the structure of the embodiment of the conversion server 1, which is different from the conversion servers 1 shown in FIGS. 2, 8, 11, and 12.

In FIG. 13, the same components as those that have already been explained are denoted by the same reference numerals, and the structure and operation thereof will be omitted.

The present embodiment is different from the embodiment shown in FIG. 11 in that two channels are used to transfer data with use of data ports of videophone communication from a terminal (particularly in the upstream direction). Output data according to data application processing is transferred through one of the two channels, and information (containing URL information) concerning a user interface or the like is transferred from the terminal through the other remaining one of the two channels.

Therefore, the data interface section 112 supplies the transferred output data according to data application processing, to the Internet protocol processing section 104, and supplies the information (containing URL information) concerning the user interface or the like to the terminal function assist section 113.

For example, the terminal function assist section 113 shown in FIG. 19 can be used.

In the terminal function assist section 113, in case where the part selected by a user is presented to the side of the user by an effect of displaying the part with its color changed or coordinate data is managed to display an object on a mouser cursor, for example, a section for managing coordinates may be provided in the combination of the HTML shaper section 1132 (shown in FIG. 19) and the key input interpreter section 1133 (also shown in FIG. 19), and this section may be added with a function of drawing a mouse cursor at the coordinates.

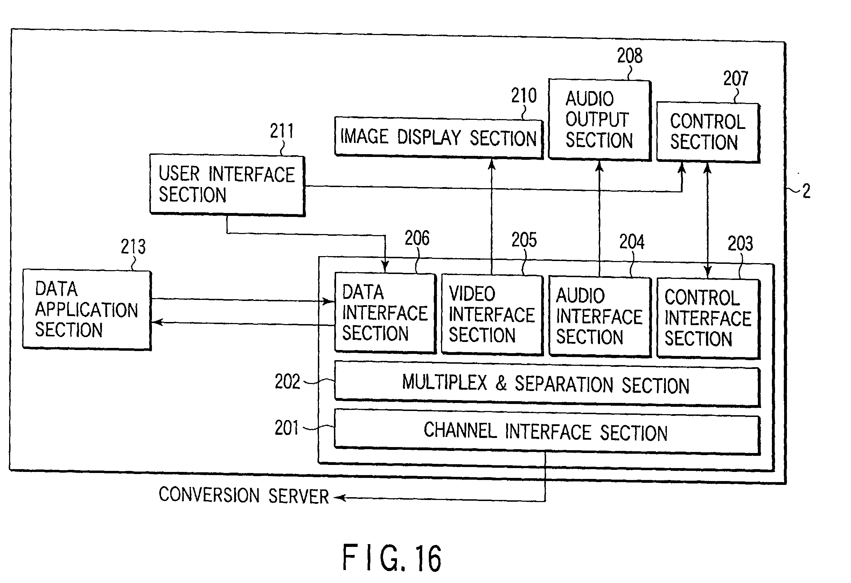

Next, an embodiment of a terminal 2 according to the present invention, which is capable of responding to the conversion server 1 shown in FIG. 13, will be explained with reference to FIG. 16. FIG. 16 is a block diagram showing the structure of the embodiment of the terminal 2, which is different from the terminals 2 shown in FIGS. 6, 7, 10, 14, and 15.

In FIG. 16, the same components as those that have already been explained are denoted by the same reference numerals, and the structure and operation thereof will be omitted.

The present embodiment differs from the embodiment shown in FIG. 14 in that two channels are used to transfer data (particularly in the upstream direction) through the data ports of videophone communication from the terminal 2, as has been explained in FIG. 13. Output data according to data application processing is transferred through one of the two channels, and information concerning the user interface (containing URL information) is transferred through the other remaining one channel from the terminal.

Therefore, the data interface section 206 is inputted with an output of the data application processing section 213 and with an output of the user interface section 211.

Although explanation has been made with reference to an example of HTML in the above embodiment, it is possible to adopt language (markup language) such as XML (Extensible Markup Language) or the like.

As has been specifically explained above, according to the present invention, the conversion server 1 converts obtained HTML and multimedia content into a format suitable for communication with the terminal 2. The terminal 2 displays the multimedia content in accordance with the obtained HTML. Therefore, direct access with servers (content servers A 4, B 5, and C 6) on the Internet is made by the conversion server 1, so that the terminal 2 need not have resources for access based on the Internet protocol.

On the other hand, the terminal 2 can obtain HTML and multimedia content through the conversion server 1. Internet can be used and multimedia can be watched and heard if only a means for forming an image based on the HTML and multimedia content is included. Hence, the transmission source server of multimedia, the conversion server 1, and the terminal 2 are efficiently connected, as a whole, and information is transmitted.

Also, according to the present invention, a channel for transferring data application data contained in multimedia to the terminal 2 can be obtained securely. Therefore, even if multimedia content contains a data application, the terminal 2 can use this application.

In addition, since access from the terminal 2 is carried out with use of information concerning HTML, the terminal 2 can transfer information for Internet access without including the Internet protocol processing section, so that the terminal 2 can realize Internet connection equivalent to a personal computer, in use.

In the case where multimedia content contains a data application, a channel can be securely maintained for transferring the output according to processing made by the data application, to the side of the conversion server 1. Therefore, the terminal 2 can bidirectionally use this application.

Independent channels are used respectively for transferring the data application data and the HTML, so that means for multiplexing and separation can be unnecessary. Hence the structure can be further simplified.

The conversion server 1 separates solely video information from an obtained multimedia content and synthesizes it with image information based on obtained HTML. The terminal 2 displays the synthesized image, so the terminal 2 need not have resources which are necessitated from processing of HTML.

Also, the conversion server receives and interprets a user's instruction to obtain HTML, and indicates the instruction in the HTML. The terminal 2 transmits the user's instruction to the conversion server 1 without changes. The instruction from the user of the terminal 2 can be transferred to the conversion server 1 without changes. Therefore, the terminal 2 does not need resources necessitated from interpretation of the instruction.

In the conversion server 1, a cursor is drawn on a synthesized image, and the terminal 2 transmits a user's instruction to the conversion server 1. Therefore, management of coordinates which is required for drawing the cursor can be achieved by the conversion server 1, so that burdens on processing/transfer made by the terminal 2 can be reduced much more.

### Industrial Applicability

As has been specifically described above, the present invention comprises: a server capable of transmitting multimedia content onto Internet; a multimedia conversion server capable of obtaining the multimedia content and retransmitting the content to the outside of the Internet; and a multimedia terminal capable of obtaining the multimedia content retransmitted and providing the content for a user to use the content, wherein the multimedia conversion server includes first access means for accessing the server through the Internet, first obtaining means for obtaining markup language and multimedia content form the server, converter means for converting the markup language and the multimedia content obtained by the first obtaining means, into a format suitable for communication with the multimedia terminal, and transmitter means for retransmitting the markup language and the multimedia content to the multimedia terminal, and the multimedia terminal includes second access means for accessing the server through the multimedia conversion server, second obtaining means for obtaining the markup language and the multimedia content retransmitted, and display means for displaying the multimedia content obtained by the second obtaining means, in accordance with the markup language obtained by the second obtaining means. As a result, direct access with a server on Internet is made by the multimedia conversion server, so the multimedia terminal need not have resources for access based on Internet protocol. On the other hand, the multimedia terminal can obtain markup language and multimedia contents through the multimedia conversion server, even though it has no resources for access based on the Internet protocol. Therefore, use of the Internet and watching/hearing of multimedia can be realized by only including a means for forming an image based on them.

## Claims

1. A multimedia providing system, comprising:
a server capable of transmitting multimedia content onto the Internet;
a multimedia conversion server capable of obtaining the multimedia content and retransmitting the content to the outside of the Internet; and
a multimedia terminal capable of obtaining the multimedia content retransmitted and providing the content for a user to use the content, wherein
the multimedia conversion server includes
first access means for accessing the server through the Internet,
first obtaining means for obtaining markup language and multimedia content form the server,
converter means for converting the markup language and the multimedia content obtained by the first obtaining means, into a format suitable for communication with the multimedia terminal, and
transmitter means for retransmitting the markup language and the multimedia content to the multimedia terminal, and
the multimedia terminal includes
second access means for accessing the server through the multimedia conversion server,
second obtaining means for obtaining the markup language and the multimedia content retransmitted, and
display means for displaying the multimedia content obtained by the second obtaining means, in accordance with the markup language obtained by the second obtaining means.

2. A multimedia conversion server comprising:
access means for accessing a server through Internet;
obtaining means for obtaining markup language and multimedia content from the server;
converter means for converting the markup language and the multimedia content obtained, into a format suitable for communication with a multimedia terminal; and
transmitter means for retransmitting the markup language and the multimedia content converted, to the multimedia terminal.

3. A multimedia terminal comprising:
access means for accessing a server on the Internet through a multimedia conversion server;
obtaining means for obtaining markup language and multimedia content through the multimedia conversion server; and
display means for displaying the obtained multimedia content in accordance with the obtained markup language.

4. A multimedia providing system, comprising:
a server capable of transmitting multimedia content onto Internet;
a multimedia conversion server capable of obtaining the multimedia content and retransmitting the content to the outside of the Internet; and
a multimedia terminal capable of obtaining the multimedia content retransmitted and providing the content for a user to use the content, wherein
the multimedia conversion server includes
first access means for accessing the server through the Internet,
first obtaining means for obtaining markup language and multimedia content from the server,
separator means for separating video information from the multimedia content obtained by the first obtaining means,
synthesizer means for synthesizing the separated video information and the markup language obtained by the first obtaining means to attain an image,
converter means for converting the image synthesized by the synthesizer means and the multimedia content obtained by the first obtaining means, into a format suitable for communication with the multimedia terminal, and
transmitter means for retransmitting the image and the multimedia content converted by the converter means, to the multimedia terminal, and
the multimedia terminal includes
second access means for accessing the server through the multimedia conversion server,
second obtaining means for obtaining the image and the multimedia content retransmitted, and
display means for displaying the image obtained by the second obtaining means.

5. The system according to claim 4, wherein the multimedia conversion server further includes receiver means for receiving an instruction of a user of the multimedia terminal from the multimedia terminal, an interpreter means for interpreting the received instruction of the user, and display means for displaying the instruction in the obtained markup language in accordance with the instruction interpreted,
the synthesizer means synthesizes the markup language including the instruction displayed by the display means, in place of the obtained markup language, and the separated video information, thereby to attain an image, and
the multimedia terminal further includes input means for inputting an instruction of a user, and transmitter means for transmitting the inputted instruction to the multimedia conversion server.

6. The system according to claim 4, wherein the multimedia conversion server further includes drawing means for drawing a cursor on the image synthesized, receiver means for receiving an instruction of a user of the multimedia terminal from the multimedia terminal, and motion means for moving a position of the cursor drawn, in accordance with the instruction received,
the converter means converts the image on which the cursor is drawn, in place of the synthesized image, and the obtained multimedia content, into a format suitable for communication with the multimedia terminal, and
the multimedia terminal further includes input means for inputting an instruction of a user, and transmitter means for transmitting the inputted instruction to the multimedia conversion server.
